(19) Europäisches Patentamt

European Patent Office

Office européen des brevets

(11) **EP 1 427 883 B1**

(12) **EUROPEAN PATENT SPECIFICATION**

(45) Date of publication and mention
of the grant of the patent:
**23.08.2006 Bulletin 2006/34**

(51) Int Cl.:
***D21B 1/32*** (2006.01)

(21) Application number: **02760339.8**

(22) Date of filing: **19.09.2002**

(86) International application number:
**PCT/FI2002/000744**

(87) International publication number:
**WO 2003/025279 (27.03.2003 Gazette 2003/13)**

(54) **METHOD AND APPARATUS FOR PRODUCING FIBRE PULP AND FUEL OUT OF MUNICIPAL WASTE**

VERFAHREN UND VORRICHTUNG ZUR GEWINNUNG VON FASER- UND BRENNSTOFF AUS SIEDLUNGSABFALL

PROCEDE PERMETTANT DE PRODUIRE DE LA PULPE ET DU COMBUSTIBLE A PARTIR DES DECHETS MUNICIPAUX

(84) Designated Contracting States:
**AT BE BG CH CY CZ DE DK EE ES FI FR GB GR IE IT LI LU MC NL PT SE SK TR**

(30) Priority: **19.09.2001 FI 20011848**

(43) Date of publication of application:
**16.06.2004 Bulletin 2004/25**

(73) Proprietor: **Metso Paper, Inc.**
**00130 Helsinki (FI)**

(72) Inventors:
 • **HUHTAMÄKI, Markku**
  **FIN-21110 Naantali (FI)**
 • **SIPILÄ, Kai**
  **FIN-02200 Espoo (FI)**
 • **HAUTALA, Jouko**
  **FIN-33400 Tampere (FI)**

(74) Representative: **Kurra, Sirpa Eliina et al**
**Forssén & Salomaa Oy**
**Eerikinkatu 2**
**00100 Helsinki (FI)**

(56) References cited:
  **GB-A- 1 547 550       SE-B- 384 632**

 • **GOETTSCHING LOTHAR ET AL.: 'Recycled fiber and deinking', 2000, PAPERMAKING SCIENCE AND TECHNOLOGY XP002958466 pages 226, 408-409, 567-574**

EP 1 427 883 B1

**Description**

The invention relates to a method for producing fibre pulp and fuel out of municipal waste. In the method the waste is pre-treated and the pre-treated waste is pulped in order to fiberize the paper contained in it in water. Two material flows are removed from the pulper, the first of which mainly contains fibre suspension and the second mainly contains indecomposable reject. The fibres contained in the first material flow are recovered and converted into fibre pulp, and the reject contained in the second material flow is correspondingly recovered and converted into fuel. The method according to the invention also helps in recovering other waste components, such as metals, from dry waste in a clean enough state for efficient recycling.

The invention also relates to a method for producing fibre pulp out of waste paper.

The invention also relates to apparatus for carrying out the above-mentioned methods.

Domestic, industrial and commercial waste flows contain a lot of usable material the recycling of which would be sensible and environmentally friendly if it could be carried out in an economically profitable fashion. Traditional alternatives of waste disposal and processing have been transportation of waste to a landfill, incineration in mass incineration plants and recycling of recyclable materials. Traditional recycling methods require the waste to be carefully separated at source and the different waste components to be collected separately. Source separation is, however, always to some extent imperfect and due to this the amount of mixed waste is significant now and will also be significant in the future.

Lately, there has been an increase in the popularity of waste energy recovery by burning quality graded recycled fuel (REF, RDF) converted from waste either in traditional boilers additionally to some other fuel or as main fuel in incineration plants especially designed for recycled fuels. Compared to a traditional mass incineration plant of mixed waste this provides lower costs and better efficiency of electricity and heat production. Waste best suited for energy recovery includes industrial and commercial packaging, paper and plastics waste and construction waste, which may together make up as much as 70 - 80 % of the amount of waste originating from these sources and which amount is usually transported to a landfill. Domestic dry waste can also be used in energy production as long as e.g. metals, glass and organic waste have first been separated from it.

The refining phases of recycled fuel typically include removal of oversized objects, crushing of waste, separation of metals and removal of sand and stones. The finished recycled fuel contains mainly plastics, wood, paper and textiles. The amount of incombustible impurities in the fuel may be for example of the order of about 5 %, depending on the sorting process. Recycled fuel is most advantageously produced out of the energy fraction separated at source and collected separately, in which case the finished fuel is called REF fuel (recovered fuel). Recycled fuel can also be produced out of unsorted mixed waste by means of mechanical treatment processes, in which case the finished product is called RDF fuel (refuse-derived fuel). The treatment of mixed waste requires more sorting phases than the treatment of dry waste separated at source. Heavy material, such as food remains can be efficiently separated from the fraction intended for incineration, for example in gravimetric (i.e. based on the size and density of the particles) sorting phases. The composition of finished RDF fuel resembles that of REF fuel to a great extent, but the proportion of impurities in it may be a bit bigger than in the REF fuel, for example of the order of about 8 %.

Patent publications describe many different methods for recovering paper fibres and/or combustible material suitable for use as recycled fuel from waste and particularly from municipal waste. None of the known methods has, however, been very popular due to disadvantages commonly related to them.

US patents *4,026,678, 4,049,391* and *5,009,672* describe methods for producing recycled fuel out of municipal waste.

Publication *FI-B-54936* describes a method and an apparatus for recovering usable material from municipal waste. A mixture of waste and water is agitated intensively by means of mechanical shearing forces, as a consequence of which the refuse particles become smaller and the paper contained in the refuse is fiberized. Non-fiberized material and fibrous sludge, containing, in addition to fibres, a large amount of impurities, are removed from the wet disintegration vessel. Impurities are extracted from the fibre-containing sludge by means of centrifugal cleaning and screening. The rejects from the cleaning phases are passed to incineration, composted or converted into animal feed or into hardboard. The rather similar particle size and specific gravity of paper fibres and of some other components contained in municipal waste has proven to be problematic in view of fibre recovery. To ensure a good enough quality in the fibre pulp recovered the amount of reject must be kept at a high level in the centrifugal cleaning and screening phases. As a consequence, over 25 - 60 % of the fibre originally fed into the system has to be rejected.

Publication *US-A-5,100,066* describes a method with which e.g. fuel and paper fibre are produced out of municipal waste. The waste is pre-treated and a light fraction containing paper, textiles and plastics is separated from it, which light fraction is washed and pulped in order to fiberize the paper contained in it in water. The sludge produced in pulping is screened to separate the fibres from the indecomposable reject, which is passed into fuel production. The fibre suspension is pressed dry and the paper fibres are delivered to the paper mill. Waste waters from screening and fibre pulp pressing are purified and returned to the pulper. In this process fibre recovery also remains poor, since fibres are lost both at the washer preceding the pulper and on the screen following pulping, from which screen some of the fibres are removed with the reject flow to incineration. The quality of the recovered fibre pulp is poor, because it is not sorted in any way after the screening following pulping and before pressing and delivery to the paper mill. Also, the quality of the fuel produced in the process is poor, as it is composed of mixed refuse material.

A problem associated with the recovery of municipal waste is the large microbe content of the waste, which content still tends to grow during the processing of the waste. This may lead to problems in the different phases of the process and the problems may also have repercussions in the fibre pulp produced out of the waste. A high level of microbial activity may also cause problems with e.g. hygiene and odours as well as lead to fibre loss and poor quality of fibre. Some known arrangements have tried to avoid problems caused by microbes by separating fibres from other waste components in a dry process from beginning to end. Wet processing has, however, its advantages, such as the purity and good quality of the fibre pulp and fuel produced.

An object of the invention is to reduce problems related to the recovery and recycling of the recyclable fractions of municipal waste.

An object is especially to provide a process by means of which it is possible to simultaneously produce, out of waste, microbiologically pure, good-quality fibre pulp and homogenous fuel with a good heating value.

A further objective of the invention is to provide a process for producing fibre pulp which meets the quality requirements set for fibre products that come into contact with foods, such as corrugated cardboard cases meant for packing fruit and vegetables.

To achieve these objects and other objects that come out later the method according to the invention is characterized in what is presented in the characterizing part of independent claims 1 and 2. The apparatus according to the invention is correspondingly characterized in what is presented in the characterizing part of claims 15 and 16.

For the sake of the purity of the fibre pulp it is essential that the retention time in the process is kept so short as to prevent the microbes from reproducing to a detrimental extent. In the method according to the invention the process tanks are designed so that the retention time of the process is less than 12 hours, preferably less than 6 hours and most preferably less than 2 hours. The purity of the process can also be enhanced by increasing the amount of water being passed to water treatment from the process. In such a case filtrates and contaminated waters of the process are circulated back into use through biological treatment, whereby the water circulating through the biological treatment rinses the process and washes nutrients and microbes out of it. In the method according to the invention the amount of water circulated through the biological treatment is 5 - 50 $m^3$, advantageously 10 - 30 $m^3$, per fibre ton recovered.

The reproduction of microbes in their growth phase can be illustrated simply with the following equation:

$$dC \,/\, dt = r\, C \qquad\qquad (1)$$

which leads to the following:

$$C_t = C_o\, e^{\,r\,t} \qquad\qquad (2)$$

In these equations:

dC/dt = increase in the amount of microbes in a time unit,
t = retention time in the process,
$C_o$ = amount of microbes at the starting point,
C = amount of microbes in the process at the point of observation,
$C_t$ = amount of microbes in the process after the lapse of time t,
r = reaction rate constant (growth rate constant) dependent on the conditions.

For the reaction rate constant r the following equation applies:

$$r = 1 \,/\, k \qquad\qquad (3)$$

where k = average division time of microbes in the conditions in question.

The division time of most microbes that can be found in the processes of the paper industry is between a half an hour and a couple of hours depending, for example, on the acidity and temperature of the process as well as on the nutrients contained by the raw material. In practice, using biocides can retard the reproduction of microbes and the problems caused by them.

The exponential growth of the microbe content can be illustrated with an example. If the number of microbes contained in the raw material is $C_o$, the division time of the microbes being one hour, after two hours the number of microbes is $C_o^2$ and after six hours $C_o^6$. Correspondingly, after 24 hours the number is $C_o^{24}$, provided that the nutrients present in the waters do not constrain the bacterial growth.

In the existing recycled fibre processes the retention times are, in practice, more than 24 hours, even several days. The retention in the process and intermediate tanks of the pulp department can be several hours. In the pulp tower, for example, it is often 8 - 12 hours, and the water tower of the pulp department is usually of a similar size and the clear filtrate tower likewise. For the sake of the controllability of the process shorter retention times have not really been accepted in traditional processes. In order to be able to control the heavy slime build-up and paper machine problems caused by microbial growth, the water circulation of the machines is dosed with biocides against microbes, with which the amount of bacteria is in most cases constrained to a level of $10^5 - 10^7$ colonies/ml.

It can be concluded from the simple calculation presented above that by reducing the retention time of the process from 24 hours to 6 hours the amount of bacteria produced by growth can be decreased at best by an order of magnitude of $C_o^{18}$ meaning that the bacteria content of the product is reduced to a billionth of a billionth. In practice, the difference is not quite as significant due to the use of biocides and a division time which is an hour longer, on average. It is clear, however, that by means of the process according to the invention, in which process the retention time is only a few hours, both the need to use biocides and the amount of bacteria carried with the product flow are very decisively reduced compared to the traditional process, in which the retention time is long.

A short retention time can be brought about by keeping the total liquid volume of the process small enough. This objective can be illustrated by means of an equation depicting the retention time t:

$$t = V_P / (F_K + F_R + F_B) \qquad (4)$$

where

$V_P$ = total liquid volume of the process equipment,
$F_K$ = volume flow discharging together with the fibres,
$F_R$ = volume flow discharging together with the reject, and
$F_B$ = volume flow passed to a biological treatment plant.

The equation illustrates well the average retention time of waters within the balance boundaries of the factory. The real retention time differs from this slightly since the water exchange rate varies in different tanks.

Said total liquid volume of the process equipment comprises the liquid volume of all pulp, water and reject tanks, the liquid volume including pulps and waters. If, for example, the reject and pulp tanks are full, the water reservoir is typically empty and vice versa. What is meant is the volume in real process usage and not the calculated volume of all the tanks added together. This is an essential piece of information in view of the reproduction of the bacteria suspended in the liquid phase. With respect to bacterial growth it is also essential that, when designing the tanks and piping, blind angles, in which the microbes are able to reproduce freely, be avoided.

The retention time can be shortened, for example by minimizing the water volumes of the process and by recycling most of the water contaminated in the process back into use through the biological treatment.

In traditional arrangements attempts have been made to minimize the amount of water passed to waste water treatment, and in most simple recycled paper mills this amount is 3 - 5 $m^3$/t. In cases where the water circulation has been closed by connecting the biological treatment to it, the amount of water circulating through it is of this order of magnitude.

In the method according to the invention the amount of water is not minimized, but instead, the biological treatment is part of the purity control of the process. A sufficient amount of water is taken into the biological treatment from the most contaminated phases of the process, and circulating the water through it reduces the growth of microbes in the process. The majority of the microbes coming into the biological treatment with the water are removed in the treatment and in the separation/clarification equipment, which is an essential part of it. The water returning to the process from the biological treatment can also be sterilized by using methods known as such, like UV-light, chlorination or ozonization. By means of sterilization biological activity can be done away with either completely or, if needed, only partly. Thus, the water circulation running through the biological treatment plant rinses and cleans the whole recovery process by delivering biological material into a cleaning plant, where it is removed from the water circulation, and thus reduces the biological activity in the fibre pulp produced. In order to achieve a good end result at least 5 m³ and not more than 50 m³, advantageously 10 - 30 m³, of water per fibre ton produced by the recovery plant should be passed to the biological treatment. Using more water than this in the circulation does not essentially decrease the level of the biological oxygen demand (BOD) of the process water. Instead, excessive increasing of the circulation adds losses.

The growth rate of microbes depends, among other things, on the temperature and pH and on the amount of nutrients, such as phosphor, nitrogen and BOD. The amount of nutrients in the process is reduced when a major part of the water used in the process is circulated through biological treatment. Thanks to efficient water treatment and short retention times the pH of pulping rises to over 7.5, whereas it normally is below 7. The biological treatment efficiently removes organic acids from the waters by breaking them down into carbon dioxide and oxygen. At the same time some of the acids is replaced by bicarbonate ions. As a consequence, the pH of water settles between 7.0 - 8.5 without using chemicals. A high pH also makes the calcium carbonate, present in the paper as filler material, dissolve to a lesser extent, thereby improving yield and reducing the amount of waste.

The purity and hygiene level of the pulp produced out of waste fibres can be further enhanced by dispersing, whereby the pulp is heated to a temperature of about 100 °C, up to 130 °C, if necessary, and is defibrated at a consistency of about 30 - 40 %, whereby the stickies present in the pulp are broken down. The retention time of pulp in dispersing is usually only 5 - 20 seconds. By increasing the retention time of pulp at a high temperature and consistency it is possible to further weaken the living conditions of microbes, whereby pure and sterile pulp is produced. In the method according to the invention dispersing is followed by hot storage, the duration of which may be 2 - 120 minutes. The minimum duration of hot storage is selected, depending on the temperature, so that the sum of temperature determined by the foodstuffs legislation for the sterilization of foods is reached.

A similar thermal treatment of pulp can also be carried out in connection with the drying of product pulp to be baled. The drying can be carried out by means of hot air, flue gas or in a steam atmosphere. The steam dryer can be a construction that passes the pulp pneumatically through heat exchangers, in which construction the retention time is typically 0.2 - 5 minutes, or a fluidised-bed dryer or a drum dryer, in which the retention time in superheated steam may be several tens of minutes.

Alternatively, the sterilization of pulp can also be carried out by means of bleaching by selecting such bleaching conditions, chemicals and retentions that the product is sterilized.

The ash content of fibre pulp produced out of waste fibres can be influenced by adjusting the recovery degree of ash in connection with the washing of the pulp. A washer suited for controlling the ash level is, for example, a GapWasher™ manufactured by the applicant. The filtrate from the washer is passed to microflotation or microfiltration, from where the ash is taken out of the process together with the sludge. The ash can also be partly or completely returned to the process depending on the properties of the raw material and the requirements of the product.

The use of recycled products made of waste fibres in the packaging of food products is limited by strict purity requirements. By means of the operations presented above it is possible to achieve, in the end product, a purity level at which board made of recycled fibre meets the requirements set for products used in connection with foods.

When pulping pre-treated municipal waste two material flows are separated from each other, the first of which is mainly composed of the water suspension of fibres and the second mainly of reject which was not decomposed during pulping. The separation into two material flows taking place in connection with the pulper is, of course, imperfect. Indeed, an additional characteristic of the invention is the recovery of fibres from the reject-containing material flow. This is carried out by washing the reject with circulation water from which the fibres have been recovered, and by passing part of the fibre-containing wash waters and the fibres recovered from the circulation water to be mixed with the fibre-containing material flow. In this way it is not only possible to increase the fibre recovery of the process, but also to enhance the heating value of the fuel produced out of the reject, since the heating value of fibres is, as is well known, significantly lower than that of, for example, plastic, which makes up the majority of the reject leaving the pulper.

The quality and purity of the fuel produced out of reject can also be enhanced by removing PVC plastics from it e.g. by using near infrared technology and the aluminium foils, for example, by means of eddy-current technology. The result is a fuel the chlorine and aluminium content of which are so low that it can safely be burned in traditional boilers. The sodium chloride contained in the waste is dissolved in water in connection with pulping, which helps in achieving low chlorine content. The heating value of the plastic-containing fuel produced with the method according to the invention is 20 - 40 MJ/kg, whereas the heating value of, for example, fuel produced out of domestic waste is less than 10 MJ/kg and the heating value of pure wood is 17 - 18 MJ/kg.

The invention will now be described in more detail with reference to the figures of the accompanying drawings, to the details of which the invention is, however, by no means intended to be narrowly confined.

Figure 1 shows fractionation of waste into different fractions in the various phases of the treatment.

Figure 2 shows pulping of waste and the following process phases in the manufacture of fibre pulp and fuel.

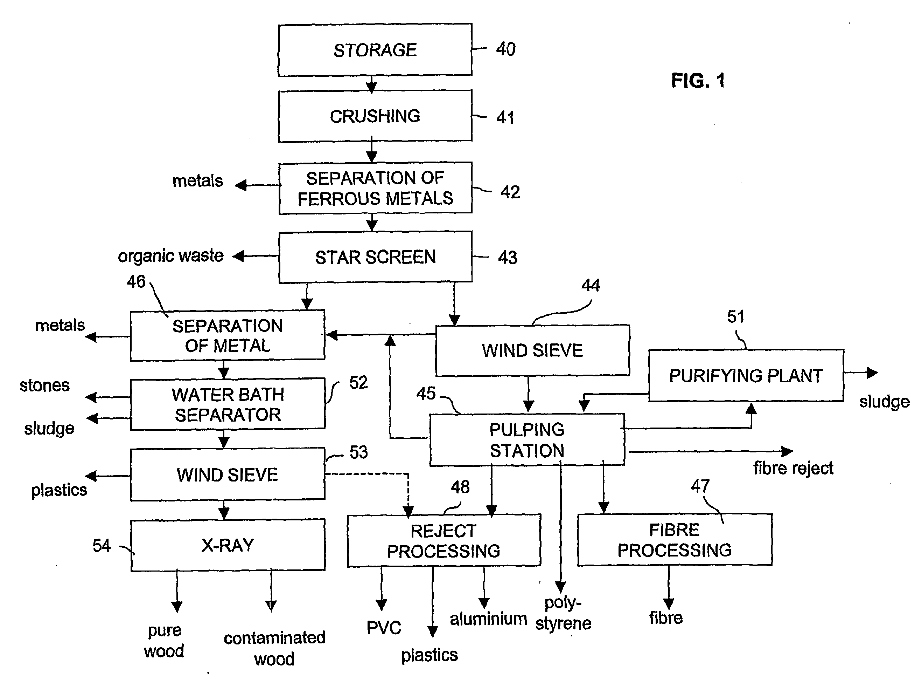

Figure 1 schematically shows a process for producing fibre pulp and fuel, in which industrial, commercial or domestic energy waste separated at source and mainly composed of wood, plastics, paper and board and other combustible substances, is used as a raw material. Mixed waste may alternatively be used as a raw material, in which case the removal of organic waste requires more effort.

The waste material is passed from an intermediate storage 40 to crushing devices 41, where it is broken down into pieces of the size suited for further treatment. After the crushers 41 ferrous metals are removed from the waste proceeding on the belt by means of a magnetic separator 42. The waste material is passed onto a star screen 43, where a light fraction containing paper and plastics is separated from it by means of air flow (suction or blowing). A fraction containing large and heavy particles is left on the screen 43, which fraction contains, for example, wood, heavy plastics and metals. Fines and organic waste discharge through the slots of the screen 43.

The light fraction separated from the waste with the star screen is passed onto a wind sieve 44, where objects with heavy specific weight are separated from it by means of air flow and gravity, which objects are passed to be mixed with the heavy waste fraction leaving the star screen 43. The pure light fraction is passed to a pulping station 45.

At the pulping station 45 the waste is diluted with water and it is agitated intensively, whereby the paper and board present in it are fiberized in water. Debris particles are removed from the fibre-containing sludge and it is passed to fibre processing 47. Reject, containing among other things plastics and aluminium foils, which was not decomposed during pulping, is passed to reject processing 48, where aluminium is separated from it with an eddy-current separator and PVC plastics with a near infrared separator. These separation phases produce a plastics fraction rich in polyethylene and polypropylene plastics, which fraction is well suited to be used as fuel or as a raw material for plastic oil. The aluminium can be reused and the PVC plastics can be used as mixed fuel in energy production, whereby chlorine emissions at the cleaning devices following the boiler are prevented.

At the pulping station 45 fibre-containing rejects are produced, which can be used, e.g. as fuel. The filtrates and contaminated waters of the pulping station 45 are passed to purifying equipment 51 - the "kidney" of the process - and from there further back to the process. The kidney includes a biological treatment plant and the needed number of other water purifiers.

The heavy waste fraction from the star screen 43 is passed to a metal separation 46, where metals are separated from it, for example by means of a magnetic separator, an eddy-current separator based on the inductivity of metals and/or a vibrating screen. After the removal of metals the waste is passed to a water bath separator 52, where heavy substances, such as glass and stones, but also fine substances like sludge and organic waste are separated from it by means of clarification. From the water bath separator 52 the waste is passed to a second wind sieve 53 of the process, where, by means of an air flow, wood is separated from other waste, which at this point comprises mainly plastics. Plastics waste can be recovered as such or it can be passed to the separation phases 48 of aluminium and PVC together with the indecomposable reject from pulping 45.

Contaminated wood containing wood preservatives or other contaminants can further be separated from the wood fraction recovered from the wind sieve 53 by means of an X-ray device 54 or another known separation method. After this, the contaminated wood can be incinerated, for example in a fluidised-bed boiler having flue gas purification equipment required by the EU Waste Incineration Directive. Pure wood can be used as a raw material for chipboard or as fuel.

From the process shown in Figure 1 a pure fibre fraction and different wood, plastics and metal fractions are recovered, which may be reused either as a raw material or as fuel. A further alternative is to provide, between the wind sieve 44 and the pulping station 45, equipment for separating different paper fractions from each other on the basis of colour, whereby brown and white paper can be passed to different pulping lines and two different pulps can be produced out of the waste.

All the waste pre-treatment phases before pulping 45 and the water bath separator 52 are carried out as a dry process without added water. Due to the specific quality of the raw material the devices used in crushing and fractioning tend to get dirty, which means that their operating efficiency is diminished. According to a further characteristic of the invention certain process devices, such as the crushers 41 and the star screen 43 are equipped with wash water sprays, with which said process devices can be cleaned from the dirt periodically or whenever necessary. Circulation water, for example mechanically purified water from the water bath separator 52, is used for washing. The wash water may also be used for decreasing the fire risk and for preventing dusting. The possibility of using circulation water in the pre-treatment process in the way illustrated above significantly improves the reliability and occupational safety of the waste treatment plant.

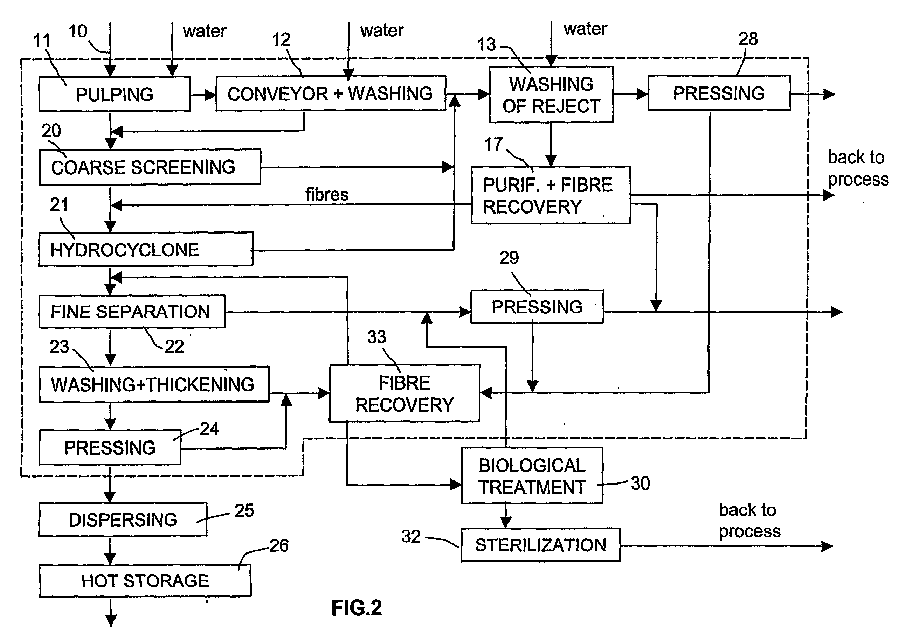

Figure 2 shows in more detail the process phases associated with the pulping of pre-treated waste and with the recovery of fibres and reject at the pulping station 45 of Figure 1 as well as the purification circulation of the waters used in the recovery process.

In a pulper 11 pre-treated dry waste 10 is diluted by means of circulation water into a mixture, the consistency of which is about 5 - 20 %. The mixture is agitated intensively, whereby the paper and board material present in the waste is fiberized in water. The fibre suspension is passed out of the pulper 11 through a fixed screen plate in the pulper, the diameter of the holes of said screen plate advantageously being about 5 - 20 mm. A second material flow containing fibres and water, but also material that is not decomposed in pulping i.e. reject (e.g. plastics, wood and textiles) is removed from the pulper 11 by means of a feed screw 12. Large, heavy particles (stones, sand, glass, etc.) sink to the lowest part of the pulper, from where they are removed by means of a separate debris trap (not shown).

The fibre suspension is first passed onto a coarse screen 20, which is advantageously a rotary drum screen, the diameter of whose holes is advantageously in a range of 1.6 - 3.0 mm. The pulper may alternatively be equipped with a rotor unit according to FI patent 82493, in which unit coarse separation of the pulp is carried out at the same time. On the coarse screen 20, e.g. plastics, slivers and other big contaminants are removed from the fibre suspension and are passed to be mixed with the reject flow discharging from the pulper 11. The accept from the coarse screening is passed to hydrocyclones 21 and further to fine separation 22. The reject from the fine separation 22 is passed through a press 29 and is thus converted into fuel. The separated pulp is washed with a washer 23, which is advantageously a GapWasher™ washer. With this washer 23 inorganic material (ash) can be washed out of the pulp, which inorganic material is further removed from the filtrate of the washer by means of microflotation. In addition, the washer thickens the pulp to a consistency of 8 - 12 %. Part of the wash filtrate is recycled through fibre recovery 33 to serve as dilution water in the process phases before washing and part is passed to be purified in a biological treatment plant 30.

After the washer 23 the pulp is thickened by means of a screw press 24 to a dry solids content of about 30 - 40 % and passed to dispersing 25. The dispersing is carried out at a temperature of about 100-130 °C. After the dispersing 25 the pulp is transported into a storage tank 26, where the temperature and consistency of the pulp are maintained substantially on the same level as in the dispersing 25. The duration of hot storage is, depending on the temperature, at least 2 minutes and not more than 120 minutes. Prolonged storage at a raised temperature and at a high consistency sterilizes the product and ensures that the microbiological requirements for the product are met.

Indecomposable material i.e. reject, mainly comprising fibres, plastics, wood, textile and other relatively light material, is continuously removed from the pulper 11 with the screw conveyor 12. The reject discharging from the pulper 11 is washed with wash water sprays as it moves along the screw conveyor 12 and the washing is continued in a reject washing drum 13. The fibre-containing water gathered in the water reservoir of the washing drum 13 is circulated through a purifying device 17 back into use. The purifying device 17 is equipped with two screening surfaces, of which the first one in the flow direction is meant for coarse screening (separation of debris particles and slivers) and the second one for fibre recovery. The water cleaned from fibres with the purifying device 17 is returned back to the process, where it can be passed, for example, to serve as wash water in the washing sprays of the screw conveyor 12 and into the pulper 11 or to serve as dilution water in coarse screening 20. The fibres recovered with the purifying device 17 and the fibre-containing wash water coming from the screw conveyor 12 are passed to be mixed with the fibre suspension discharging from the pulper 11.

After the washing drum 13 water is removed from the reject by pressing it as dry as possible, to a dry solids content of about 50 - 70 %, by means of a screw press 28. After this, the reject is passed to further treatment, where it is converted into fuel or into a form suited for recycling the material. The further treatment phases may include, for example, crushing or grinding of the reject and further fractionation for producing various fuel or recyclable fractions. The waste fuel produced in the way illustrated above is of a higher purity and quality compared to normal recycled fuel produced in a dry process, because organic material with a low heating value and incombustible inorganic material have been removed from it in connection with the wet treatment.

5 - 50 $m^3$, advantageously 10 - 30 $m^3$, per fibre ton produced from filtrates and other dirty waters generated in the processing of waste are passed through the fibre recovery 33 to be purified in the biological treatment plant 30. Before the biological treatment fibres, fines and ash can be recovered, for example by means of a screen and by flotation. By combining the techniques it is possible to adjust the quality of the product to a uniform level to meet the requirements. This can be influenced by returning the fibres from the screen back to the process and by taking part or all of the ash-solids mixture separated in microflotation back into production. In microflotation it is possible to affect the separation ratios between ash and other fines by changing the running parameters. After the biological treatment 30 the purified water is returned to the process and the excess is passed to a wastewater treatment plant. If particularly pure water is needed, part of the biologically treated water can still be treated with ultra- and/or nanofiltration. The water or part of the water to be returned to the process can also be sterilized, and in this way living biomass can be prevented from returning to the fibre recovery line.

Thanks to the biological treatment of circulation water the biological oxygen demand (BOD) of the process can be brought to the same level as in a traditional open water circulation system. As a consequence the pH of the process rises to a range of 7.5 - 8.5 and the biological activity in the water circulation diminishes. The activity of anaerobic bacteria is essentially reduced and odour nuisances also diminish.

An object of the invention is that the waste material passes rapidly through the treatment process, meaning that there is not enough time for the microbes to reproduce significantly during the process. The exponential effect of the retention time t on the growth of microbes C/dt is illustrated by the equation presented above (2):

$$C_t = C_o\, e^{\,r\,t}$$

To decrease the retention time the liquid volume $V_P$ of the process is minimized and the amount of water $F_B$ passed from the process to water treatment is increased beyond the traditional amount. The retention time t is defined by the equation presented above (4):

$$t = V_P / (F_K + F_R + F_B)$$

The liquid volume $V_P$ of the process means the amount of liquid circulating in the liquid circulation, outlined in Figure 2 with dashed lines, between the pulper 11, fibre press 24 and reject press 28. In the example case the total volume is considered to include the pulper 11, the devices 20, 21, 22, 23, 24, 29 and 33 used in fibre recovery, the devices 12, 13, 17 and 28 used in reject recovery and the pipings connecting them. $F_K$ is the volume flow discharging from the process equipment together with the fibres - in Figure 2 being the water flow leaving the press 24 with the pulp. $F_R$ is the volume flow discharging from the process equipment together with the reject - in Figure 2 being the water flow leaving the press 28 with the reject. $F_B$ is the volume flow discharging from the process equipment to enter the biological treatment plant, including, in Figure 2, the filtrates of the pulp washer 23 and the press 24 as well as the filtrates of the reject presses 28 and 29.

Not only does the invention help to minimize the retention time t of the process, but it also prevents the minimizing of the process flow $F_B$ passed to biological treatment, something that has been common practice in the traditional process. In the traditional process the volume flows $F_K + F_R$ discharging together with the fibres and the reject are altogether about 1 - 2 $m^3/t$ and $F_B$ is typically 3 - 5 $m^3/t$. In the method according to the invention the flow $F_B$ is increased to a level of 5 - 50 $m^3/t$, advantageously 10 - 30 $m^3/t$. The flow increase from level 4 $m^3/t$ to level 10 $m^3/t$ affects the growth of microbes in the same way as halving the liquid volume of the process according to the equation $t = V_P / (F_K + F_R + F_B)$.

Thanks to the biological treatment of the circulation water the pH of the process is higher than in a corresponding process using fresh water. The circulation of waters through the biological treatment removes nutrients from the process waters, whereby the reaction rate constant r in the equation (2) decreases and the growth of microbes slows down.

When the fibre pulp is, in addition, treated thermally at a raised temperature, the finished fibre pulp does not contain living biological material.

The basic idea of the invention for diminishing microbial activity by decreasing the retention time of the process can well be applied also in traditional pulp and paper manufacture using waste paper. In such a case the amount of reject and the volume flow $F_R$ discharging with it are naturally smaller than when using municipal waste.

Instead of biological treatment another known water treatment method for reducing the amount of microbes in the water circulation may be used. Alternatively, the amount of water to be passed to the water treatment can be substituted with fresh water, when plenty of it is available.

The claims will now be presented, and, within the inventive idea defined by the claims, the details of the invention may vary and differ from what is presented above as exemplary only.

**Claims**

1.    A method for producing fibre pulp and fuel out of municipal waste, which method comprises phases in which the waste is pulped in order to fiberize the paper contained in it in water, two material flows are removed from the pulper, the first flow containing mainly fibre suspension and the second flow containing mainly indecomposable reject, the fibres present in the first material flow are recovered and converted into fibre pulp, and the reject contained in the second material flow is recovered and converted into fuel, **characterized in that** before passing to the pulper the waste is pre-treated in a dry state and the retention time of the subsequent wet process $t = V_P / (F_K + F_R + F_B)$ is kept shorter than 12 hours, advantageously shorter than 6 hours.

2.    A method for producing fibre pulp out of waste paper, which method comprises phases in which the waste paper is pulped and the pulp suspension obtained from pulping is converted into fibre pulp, **characterized in that** the retention time of the process $t = V_P / (F_K + F_R + F_B)$ is kept shorter than 12 hours, advantageously shorter than 6 hours.

**3.** A method according to claim 1 or 2, **characterized in that** the retention time t of the process is kept short by minimizing the total liquid volume Vp of the process and by increasing the amount of water $F_B$ being passed from the process to water treatment.

**4.** A method according to claim 1 or 2, **characterized in that** water is passed from the process to biological treatment and the purified water is used for rinsing the process in order to reduce its microbe content.

**5.** A method according to claim 4, **characterized in that** 5 - 50 $m^3$, advantageously 6 - 30 $m^3$ of water per fibre ton recovered is passed to biological treatment.

**6.** A method according to claim 4, **characterized in that** solids are removed from the biologically treated water to be returned to the process and it is possibly chemically or physically sterilized.

**7.** A method according to claim 1 or 2, **characterized in that** when processing the fibres the fibre pulp is washed and the ash content of the pulp is controlled and adjusted in connection with the washing.

**8.** A method according to claim 1 or 2, **characterized in that** when processing the fibres the fibre pulp is dispersed at a temperature of 100 - 130 °C and a consistency of 30 - 40 %, after which it is held, depending on the sterilization temperature, at least for 2 - 120 minutes at a raised temperature and consistency, whereby the norms set for the sterilization of foods are met.

**9.** A method according to claim 1 or 2, **characterized in that** when processing the fibres, the fibre pulp is bleached and in the bleaching such process conditions are used in which the microbes present in the pulp are destroyed.

**10.** A method according to claim 1 or 2, **characterized in that** the fibre pulp processed out of the fibres is dried in conditions in which the microbes present in the pulp are destroyed.

**11.** A method according to claim 1 or 2, **characterized in that** fibres are recovered from the reject-containing material flow by washing it with circulation water, from which the fibres are recovered and passed to the fibre-containing material flow.

**12.** A method according to claim 1, **characterized in that** when processing the reject from pulping, PVC plastics and/or aluminium are removed from it.

**13.** A method according to claim 1, **characterized in that** the pre-treatment of waste before pulping comprises phases in which the waste is crushed and heavy material is removed from it, and that water is passed at intervals into the process devices used in these phases in order to wash them.

**14.** A method according to claim 15, **characterized in that** the wash water passed to the pre-treatment process devices is taken from the circulation water system of the waste treatment process.

**15.** An apparatus for producing fibre pulp and fuel out of municipal waste, which apparatus comprises devices for pulping the waste, devices for recovering fibres and converting them into fibre pulp, as well as devices for recovering the reject from pulping and converting it into fuel, **characterized in that** it further comprises devices for pre-treating waste in a dry state and the total liquid volume $V_P$ of the devices used in pulping and in the recovery processes following it is designed so that it satisfies the equation of the retention time $t = V_P / (F_K + F_R + F_B) < 12$ hours, advantageously $t = V_P / (F_K + F_R + F_B) < 6$ hours.

**16.** An apparatus for producing fibre pulp out of waste paper, which apparatus comprises devices for pulping waste paper and devices for converting the pulp suspension obtained from pulping into fibre pulp, **characterized in that** the total liquid volume $V_P$ of the devices used in pulping and in the recovery processes following it is designed so that it satisfies the equation of the retention time $t = V_P / (F_K + F_R + F_B) < 12$ hours, advantageously $t = V_P / (F_K + F_R + F_B) < 6$ hours.

**Patentansprüche**

**1.** Verfahren zum Herstellen einer Faserpulpe und Brennstoff aus häuslichem Abfall, wobei das Verfahren Phasen aufweist, bei denen der Abfall zu Pulpe gestaltet wird, um das in ihm enthaltene Papier in Wasser zu zerfasern, wobei zwei Materialströmungen von dem Pulper entfernt werden, wobei die erste Strömung hauptsächlich Fasersuspension enthält und die zweite Strömung hauptsächlich nicht zersetzbaren Rejekt enthält, wobei die in der ersten Materialströmung vorhandenen Fasern wiedergewonnen werden und zu Faserpulpe umgewandelt werden, und wobei der Rejekt, der in der zweiten Materialströmung enthalten ist, wiedergewonnen wird und zu Brennstoff umgewandelt wird,
**dadurch gekennzeichnet, dass**
bevor er zu dem Pulper tritt, der Abfall in einem trockenen Zustand vorbehandelt wird und die Retentionszeit von dem anschließenden Nassprozess $t = V_P / (F_K + F_R + F_B)$ kürzer als 12 Stunden, in vorteilhafter Weise kürzer als 6 Stunden, gehalten wird.

2. Verfahren zum Herstellen einer Faserpulpe aus Abfallpapier, wobei das Verfahren Phasen aufweist, bei denen das Abfallpapier zu Pulpe gestaltet wird und die Pulpensuspension, die aus der Pulpeerzeugung erhalten wird, zu Faserpulpe umgewandelt wird,
**dadurch gekennzeichnet, dass**
die Retentionszeit von dem Prozess $t = V_P / (F_K + F_R + F_B)$ kürzer als 12 Stunden, in vorteilhafter Weise kürzer als 6 Stunden, gehalten wird.

3. Verfahren gemäß Anspruch 1 oder 2,
**dadurch gekennzeichnet, dass**
die Retentionszeit $t$ von dem Prozess kurz gehalten wird, indem das gesamte Flüssigkeitsvolumen $V_P$ von dem Prozess minimal gestaltet wird und indem die Menge an Wasser $F_B$, die von dem Prozess zu der Wasserbehandlung tritt, erhöht wird.

4. Verfahren gemäß Anspruch 1 oder 2,
**dadurch gekennzeichnet, dass**
Wasser von dem Prozess zu einer biologischen Behandlung tritt, und gereinigtes Wasser verwendet wird, um den Prozess zu spülen, um seinen Mikrobengehalt zu verringern.

5. Verfahren gemäß Anspruch 4,
**dadurch gekennzeichnet, dass**
5 - 50 m$^3$, in vorteilhafter Weise 6 - 30 m$^3$ an Wasser pro Tonne an wiedergewonnenen Fasern zu der biologischen Behandlung tritt.

6. Verfahren gemäß Anspruch 4,
**dadurch gekennzeichnet, dass**
Feststoffe aus dem biologisch behandelten Wasser entfernt werden, damit sie zu dem Prozess zurückkehren und möglicherweise chemisch oder physikalisch sterilisiert werden.

7. Verfahren gemäß Anspruch 1 oder 2,
**dadurch gekennzeichnet, dass**
beim Behandeln der Fasern die Faserpulpe gewaschen wird und der Aschegehalt der Pulpe gesteuert wird und eingestellt wird in Verbindung mit dem Waschen.

8. Verfahren gemäß Anspruch 1 oder 2,
**dadurch gekennzeichnet, dass**
beim Behandeln der Fasern die Faserpulpe bei einer Temperatur von 100 - 130°C und einer Konsistenz von 30 - 40 % dispergiert wird, wobei sie danach in Abhängigkeit von der Sterilisationstemperatur zumindest 2 - 120 Minuten lang bei einer erhöhten Temperatur und Konsistenz gehalten wird, wodurch die für die Sterilisation von Nahrungsmitteln auferlegten Normen erfüllt werden.

9. Verfahren gemäß Anspruch 1 oder 2,
**dadurch gekennzeichnet, dass**
beim Behandeln der Fasern die Faserpulpe gebleicht wird und bei dem Bleichen derartige Prozessbedingungen verwendet werden, bei denen die in der Pulpe vorhandenen Mikroben zerstört werden.

10. Verfahren gemäß Anspruch 1 oder 2,
**dadurch gekennzeichnet, dass**

die Faserpulpe, die aus den Fasern behandelt wird, unter Bedingungen getrocknet wird, bei denen die in der Pulpe vorhandenen Mikroben zerstört werden.

**11.** Verfahren gemäß Anspruch 1 oder 2,
**dadurch gekennzeichnet, dass**
Fasern aus der Rejekt enthaltenden Materialströmung wiedergewonnen werden, indem sie mit Zirkulationswasser gewaschen werden, aus den die Fasern wiedergewonnen werden und das zu der Fasern enthaltenden Materialströmung geleitet wird.

**12.** Verfahren gemäß Anspruch 1,
**dadurch gekennzeichnet, dass**
beim Behandeln des Rejekts aus der Pulpeerzeugung PVC-Kunststoff und / oder Aluminium von diesem entfernt werden.

**13.** Verfahren gemäß Anspruch 1,
**dadurch gekennzeichnet, dass**
die Vorbehandlung von dem Abfall vor der Pulpeerzeugung Phasen aufweist, bei denen der Abfall zerkleinert wird und schweres Material von ihm entfernt wird, und das Wasser in Intervallen zu den Prozessvorrichtungen tritt, die in diesen Phasen verwendet werden, um sie zu waschen.

**14.** Verfahren gemäß Anspruch 15,
**dadurch gekennzeichnet, dass**
Waschwasser, das zu den Vorbehandlungsprozessvorrichtungen tritt, von dem Zirkulationswassersystem des Abfallbehandlungsprozesses genommen wird.

**15.** Gerät zum Herstellen von Faserpulpe und Brennstoff aus häuslichem Abfall, wobei das Gerät Vorrichtungen zum Pulpebilden aus dem Abfall, Vorrichtungen zum Wiedergewinnen von Fasern und Umwandeln von ihnen zu Faserpulpen und auch Vorrichtungen zum Wiedergewinnen des Rejekts aus dem Pulpebilden und zum Umwandeln von diesem zu Brennstoff aufweist,
**dadurch gekennzeichnet, dass**
es des Weiteren Vorrichtungen für ein Vorbehandeln von Abfall in einem trockenen Zustand aufweist und das gesamte Flüssigkeitsvolumen $V_P$ der Vorrichtungen, die bei dem Pulpebilden und bei den diesem folgenden Wiedergewinnungsprozessen verwendet werden, so gestaltet ist, dass es die Gleichung der Retentionszeit $t = V_P / (F_K + F_R + F_B) < 12$ Stunden, in vorteilhafter Weise $t = V_P / (F_K + F_R + F_B) < 6$ Stunden erfüllt.

**16.** Gerät zum Herstellen von Faserpulpe aus häuslichem Abfall, wobei das Gerät Vorrichtungen für ein Pulpebilden aus Abfallpapier und Vorrichtungen zum Umwandeln der Pulpesuspension, die aus dem Pulpebilden erhalten wird, zu Faserpulpe aufweist,
**dadurch gekennzeichnet, dass**
das gesamte Flüssigkeitsvolumen $V_P$ der Vorrichtungen, die bei dem Pulpebilden und bei den dieser folgenden Wiedergewinnungsprozessen verwendet werden, so gestaltet ist, dass es die Gleichung der Retentionszeit $t = V_P / (F_K + F_R + F_B) < 12$ Stunden, in vorteilhafter Weise $t = V_P / (F_K + F_R + F_B) < 6$ Stunden erfüllt.

**Revendications**

**1.** Procédé permettant de produire de la pâte de fibres et du combustible à partir de déchets municipaux, lequel procédé comprend des phases dans lesquelles les déchets sont triturés afin de dépastiller le papier contenu dans ceux-ci dans l'eau, deux flux de matériaux sont retirés du triturateur, le premier flux contenant essentiellement une suspension de fibres et le second flux contenant essentiellement des rejets non décomposables, les fibres présentes dans le premier flux de matériau sont récupérées et converties en pâte de fibres, et le rejet contenu dans le second flux de matériau est récupéré et converti en combustible, **caractérisé en ce que**, avant de passer dans le triturateur, les déchets sont prétraités à l'état sec et **en ce que** le temps de contact du processus par voie humide qui suit $t = V_P / (F_K + F_R + F_B)$ est maintenu inférieur à 12 heures, de façon avantageuse, inférieur à 6 heures.

**2.** Procédé permettant de produire de la pâte de fibre à partir de déchets de papier, lequel procédé comprend des phases dans lesquelles les déchets de papier sont triturés et la suspension de pâte obtenue à l'issue de la trituration est convertie en pâte de fibre, **caractérisé en ce que** le temps de contact du processus $t = V_P / (F_K + F_R + F_B)$ est maintenu inférieur à 12 heures, de façon avantageuse, inférieur à 6 heures.

3. Procédé selon la revendication 1 ou 2, **caractérisé en ce que** le temps de contact t du processus est maintenu court en minimisant le volume total de liquide $V_P$ du processus et en augmentant la quantité d'eau $F_B$ qui est envoyée du processus au traitement de l'eau.

4. Procédé selon la revendication 1 ou 2, **caractérisé en ce que** de l'eau est envoyée du processus au traitement biologique et que l'eau épurée est utilisée pour le rinçage du processus afin de réduire sa teneur en microbes.

5. Procédé selon la revendication 4, **caractérisé en ce que** 5 à 50 m$^3$, avantageusement 6 à 30 m$^3$ d'eau par tonne de fibres récupérée sont envoyés au traitement biologique.

6. Procédé selon la revendication 4, **caractérisé en ce que** des solides sont éliminés de l'eau traitée par des moyens biologiques pour être renvoyée au processus et elle est éventuellement stérilisée par des moyens chimiques ou physiques.

7. Procédé selon la revendication 1 ou 2, **caractérisé en ce que**, lors du traitement des fibres, la pâte de fibres est lavée et la teneur en cendres de la pâte est contrôlée et ajustée en rapport avec le lavage.

8. Procédé selon la revendication 1 ou 2, **caractérisé en ce que**, lors du traitement des fibres, la pâte de fibre est dispersée à une température de 100 à 130°C et une consistance de 30 à 40 %, après quoi elle est maintenue, en fonction de la température de stérilisation, pendant au moins 2 à 120 minutes, à une température et une consistance augmentées, moyennant quoi les normes fixées pour la stérilisation des aliments sont satisfaites.

9. Procédé selon la revendication 1 ou 2, **caractérisé en ce que**, lors du traitement des fibres, la pâte de fibre est blanchie et, lors du blanchiment, les conditions de traitement utilisées sont telles que les microbes présents dans la pâte sont détruits.

10. Procédé selon la revendication 1 ou 2, **caractérisé en ce que** la pâte de fibre obtenue par traitement des fibres est séchée dans des conditions dans lesquelles les microbes présents dans la pâte sont détruits.

11. Procédé selon la revendication 1 ou 2, **caractérisé en ce que** des fibres sont récupérées dans le flux de matériau contenant les rejets par lavage de celui-ci au moyen d'eau de circulation dans laquelle les fibres sont récupérées et envoyées dans le flux de matériau contenant les fibres.

12. Procédé selon la revendication 1, **caractérisé en ce que**, lors du traitement des rejets résultant de la trituration, les plastiques PVC et/ou l'aluminium sont éliminés de ceux-ci.

13. Procédé selon la revendication 1, **caractérisé en ce que** le prétraitement des déchets avant la trituration comprend des phases dans lesquelles les déchets sont écrasés et les matériaux lourds éliminés de ceux-ci et **en ce que** de l'eau est envoyée par intervalles dans les dispositifs de traitement utilisés lors de ces phases afin de les laver.

14. Procédé selon la revendication 13, **caractérisé en ce que** l'eau de lavage envoyée dans les dispositifs du processus de prétraitement est prélevée sur le circuit d'eau de circulation du processus de traitement des déchets.

15. Appareil permettant de produire de la pâte de fibres et du combustible à partir de déchets municipaux, lequel appareil comprend des dispositifs de trituration des déchets, des dispositifs de récupération des fibres et de transformation de celles-ci en pâte de fibre, ainsi que des dispositifs permettant de récupérer les rejets résultant de la trituration et de les transformer en combustible, **caractérisé en ce qu'**il comprend en outre des dispositifs permettant de pré traiter les déchets à l'état sec et **en ce que** le volume total de liquide $V_P$ des dispositifs utilisés dans la trituration et dans les processus de récupération qui la suivent est calculé de manière à satisfaire l'équation du temps de contact $t = V_P / (F_K + F_R + F_B) < 12$ heures, de façon avantageuse, $t = V_P / (F_K + F_R + F_B) < 6$ heures.

16. Appareil permettant de produire de la pâte de fibres à partir de déchets municipaux, lequel appareil comprend des dispositifs de trituration des déchets de papier et des dispositifs permettant de convertir la suspension de pâte résultant de la trituration en pâte de fibre, **caractérisé en ce que** le volume total de liquide $V_P$ des dispositifs utilisés dans la trituration et dans les processus de récupération qui la suivent est calculé de manière à satisfaire l'équation du temps de contact $t = V_P / (F_K + F_R + F_B) < 12$ heures, de façon avantageuse, $t = V_P / (F_K + F_R + F_B) < 6$ heures.

FIG. 1

**FIG.2**

EP 1 427 883 B1